# EUROPEAN PATENT SPECIFICATION

(11) **EP 3 529 535 B1**
(45) Date of publication and mention of the grant of the patent: **12.01.2022**
(21) Application number: 17862325.2
(22) Date of filing: 20.10.2017
(51) Int. Cl.: F23R 3/16, F23R 3/14, F23R 3/28, F02C 7/22

(54) **APPARATUS FOR USING PLASMA TO ASSIST WITH THE COMBUSTION OF FUEL**
VORRICHTUNG ZUR VERWENDUNG VON PLASMA ZUR UNTERSTÜTZUNG DER VERBRENNUNG VON BRENNSTOFF
APPAREIL D'UTILISATION DE PLASMA POUR AIDER À LA COMBUSTION DE CARBURANT

(30) Priority: 21.10.2016 US 201662411127 P
(43) Date of publication of application: 28.08.2019
(73) Proprietor: FGC Plasma Solutions, Middleton, MA 01949 (US)
(72) Inventor: GOMEZ DEL CAMPO, Felipe, Middleton MA 01949 (US)
(74) Representative: Creation IP Ltd
(86) International application number: PCT/US2017/057530
(87) International publication number: WO 2018/075854

(56) References cited:
- EP-A2- 2 093 489
- WO-A1-2015/172007
- WO-A1-2015/172007
- US-A1- 2005 044 854
- US-A1- 2005 044 854
- US-A1- 2008 193 886
- US-A1- 2009 071 158
- US-A1- 2009 165 436
- US-A1- 2011 126 548
- US-A1- 2012 304 649
- US-A1- 2014 165 585

## Description

### Related Application

This application claims priority from U.S. Provisional Application No. 62/411,127, filed October 21, 2016.

### Technical Field

This disclosure relates to an apparatus for the combustion of fuel and, more particularly, to a method and apparatus for using plasma to assist with the combustion of fuel, which could be liquid fuel.

### Background

Plasma is an electronically exited state of matter in which the electrons from individual atoms are stripped via electrical interactions with the energy source and by collisions with other energized particles. Plasmas are useful at speeding up reactions by transferring the plasma's energy into the vibration, translational or rotational energy of reactants. Plasma assisted reactions usually include reforming the reactants. Reactants are reformed by the breaking of bonds and the production of active radicals.

The production of active radicals is the mechanism by which combustion propagates. This process occurs at the expense of energy and time. Eliminating or bypassing the discrete reaction steps could increase the rate of the reaction. This may be achieved through a plasma-assisted reaction.

Moreover, in modern turbofan engines the velocity of the air at the entrance of the combustion chamber is around 150 meters per second depending on the thrust rating of the engine and the atmospheric conditions. The speed of the velocity air entering the combustion chamber is of concern because this 150 m/s flow velocity is much higher than the flame speed of a kerosene air flame, and may make it difficult to sustain combustion. For combustion to occur in a sustainable manner, engine designers generally will reduce both the velocity and pressure of the incoming air before attempting to initiate a combustion reaction with that air. To reduce the velocity and/or pressure of the combustion air, the combustion chamber often will be provided with particularly selected specialty geometries, which impede the airflow and force it to reduce its velocity. Examples of these geometries are swirl vanes and dilution holes, as well as the shape of the combustion chamber itself. The chamber can be shaped to create an eddy-an area of lower pressure in which combustion is permitted to occur-albeit at the expense of a pressure drop across the combustion chamber. According to basic thermodynamics, this pressure drop in the combustion chamber will reduce efficiency of combustion. As a result of this compromise in even the most efficient jet engines, roughly 10% of the input fuel is left un-burnt.

Moreover, the high temperatures used in the efficient operation of a jet engine also promote the oxidation of atmospheric nitrogen, creating NOx emissions. It has been shown that a way to decrease NOx emissions while simultaneously decreasing fuel burn is to minimize the fuel to air ratio in the combustor. Lean Direct injection (LDI) and Lean Premixed Prevaporized (LPP) combustion systems deliver these air-fuel mixtures. However, the challenge with lean combustion in jet engines is that lean flames are unstable and are subject to blow off, extinction, and thermo-acoustic oscillations, which can cause severe mechanical damage to the engine.

To address this combustion condition, successful and efficient ignition in short residence time environments or ultra-lean mixtures is a key challenge for incorporating plasma generator with combustion devices. The geometric and mechanic applicability of plasma discharges in jet combustion engines is important to control combustion reaction. In a combustion assisted with plasma, the combustion can sustain in lean blow out conditions. A plasma-assisted combustion can potentially give an efficiency boost to a jet engine. The disclosure here is to introduce plasma to the reaction - near or at the location where the flame ignites.

WO 2015/172007, US 2011/126548 relate to apparatus for assisting with the combustion of fuel and EP 2 093 489 relates to a radially outward flowing air-blast fuel injector for gas turbine engines.

### Summary

The present invention provides an apparatus as recited in the appended claims. In an aspect, an apparatus for assisting with the combustion of fuel includes a swirler assembly having at least one swirler assembly inlet and at least one swirler assembly outlet separated from the at least one swirler assembly inlet by a swirler body defining a swirler assembly inner wall. A fuel nozzle includes a fuel nozzle mixing zone, a fuel nozzle air inlet, and a fuel nozzle air outlet. The fuel nozzle mixing zone is in fluid communication with both a fuel nozzle fuel reservoir and the fuel nozzle air inlet. The fuel nozzle air inlet allows air to flow into the fuel nozzle. Fuel from the fuel nozzle fuel reservoir is directed into the fuel nozzle mixing zone and combines with air inside the fuel nozzle mixing zone to form a fuel-air mixture. At least one plasma generator is located at least partially within the lip recirculation zone. The plasma generator at least partially ionizes and/or dissociates the fuel-air mixture to generate at least one of an at least partially ionized air-fuel mixture and an at least partially dissociated air-fuel mixture ("at least partially I/D air-fuel mixture") via a plasma generator discharge. A combustion chamber has a combustion chamber inlet in fluid communication with the swirler assembly outlet. The combustion chamber has a combustion chamber outlet. The combustion chamber inlet and outlet are radially separated by a combustion chamber internal volume including an R/R zone, at least one of a main flame and a pilot flame, and the lip recirculation zone including a stabilization zone of low velocity air circulation. The combustion chamber inlet admits the at least partially I/D air-fuel mixture from the plasma generator into the combustion chamber internal volume. Combustion air enters the swirler assembly inlet, flows through the swirler body, and exits the swirler body through the swirler assembly outlet. The combustion air flows from the swirler assembly outlet into the combustion chamber internal volume through the combustion chamber inlet. A plurality of combustion air inputs allows for fluidly separate and individually contiguous flows of air to travel through the combustion chamber with a rotational velocity imparted on the flows by the swirler assembly. The plurality of combustion air inputs travel at different speeds and/or in opposite spiral directions. The area between separate air flows contains a shear layer of increased turbulence for improving at least one of mixing, atomization and/or flame stabilization. Combustion of the at least one of an at least partially ionized air-fuel mixture and an at least partially I/D air-fuel mixture with the plurality of combustion air inputs occurs at least partially within the combustion chamber internal volume to responsively produce combustion products. The combustion products exit the combustion chamber internal volume through the combustion chamber outlet.

### Brief Description of the Drawings

For a better understanding, reference may be made to the accompanying drawings, in which:
Fig. 1 is a schematic side view of a prior art apparatus;
Fig. 2 is a cross-sectional view of a configuration which is not part of the invention, taken perpendicular to the longitudinal axis, LO;
Fig. 3 is a cross-sectional view of a second configuration which is not part of the invention taken perpendicular to the longitudinal axis, LO;
Fig. 4 is a cross-sectional view of a portion of the apparatus of Fig. 3 taken perpendicular to the longitudinal axis, LO;
Fig. 5A is a cross-sectional view taken perpendicular to the longitudinal axis, LO, of an aspect of the invention;
Fig. 5B is a detail view of area "B" of Fig 5A;
Figs. 6A-6D are schematic views of example plasma generators according to the present disclosure;
Fig. 7 is a flowchart describing at least a portion of an example sequence of operation of a method which is not part of the present invention; and
Fig. 8 is a flowchart describing at least a portion of an example sequence of operation which is not part of the present invention.

### Description of Aspects of the Disclosure

Unless defined otherwise, all technical and scientific terms used herein have the same meaning as is commonly understood by one of skill in the art to which the present disclosure pertains.

As used herein, the singular forms "a," "an" and "the" can include the plural forms as well, unless the context clearly indicates otherwise. It will be further understood that the terms "comprises" and/or "comprising," as used herein, can specify the presence of stated features, steps, operations, elements, and/or components, but do not preclude the presence or addition of one or more other features, steps, operations, elements, components, and/or groups thereof.

As used herein, the term "and/or" can include any and all combinations of one or more of the associated listed items.

As used herein, phrases such as "between X and Y" and "between about X and Y" can be interpreted to include X and Y.

Spatially relative terms, such as "under," "below," "lower," "over," "upper" and the like, may be used herein for ease of description to describe one element or feature's relationship to another element(s) or feature(s) as illustrated in the figures. It will be understood that the spatially relative terms can encompass different orientations of a device in use or operation, in addition to the orientation depicted in the figures. For example, if a device in the figures is inverted, elements described as "under" or "beneath" other elements or features would then be oriented "over" the other elements or features.

It will be understood that, although the terms "first," "second," etc. may be used herein to describe various elements, these elements should not be limited by these terms. These terms are only used to distinguish one element from another. Thus, a "first" element discussed below could also be termed a "second" element without departing from the teachings of the present disclosure. The sequence of operations (or steps) is not limited to the order presented in the claims or figures unless specifically indicated otherwise.

The invention comprises, consists of, or consists essentially of the following features, in any combination.

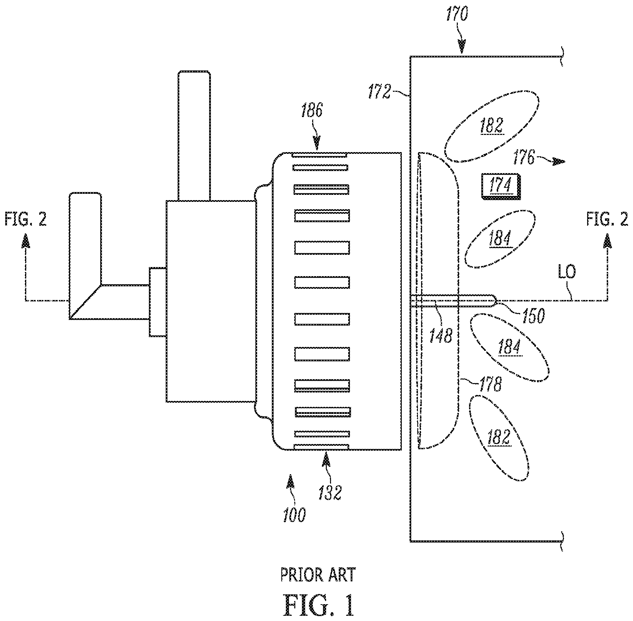

Figs. 1-5 depict aspects of an apparatus 100 for assisting with the combustion of fuel. Fig. 1 illustrates, by way of orienting the reader, a prior art device as disclosed in U.S. Patent 9,423,133, issued 23 August 2016 to Felipe Gomez del Campo. The description herein presumes that the apparatus 100 is being used as part of a j et engine, but the apparatus 100 may also or instead be used in a gas turbine or any other suitable use application.

### SWIRLER ASSEMBLY

A swirler assembly is generally used to promote the swirling or rotational movement of air within a combustion engine. The swirler assembly takes in air and rotates it with some velocity. This rotational movement of the air allows the air to better mix with the fuel after the air leaves the swirler assembly. Better mixing of air and fuel leads to a cleaner combustion process.

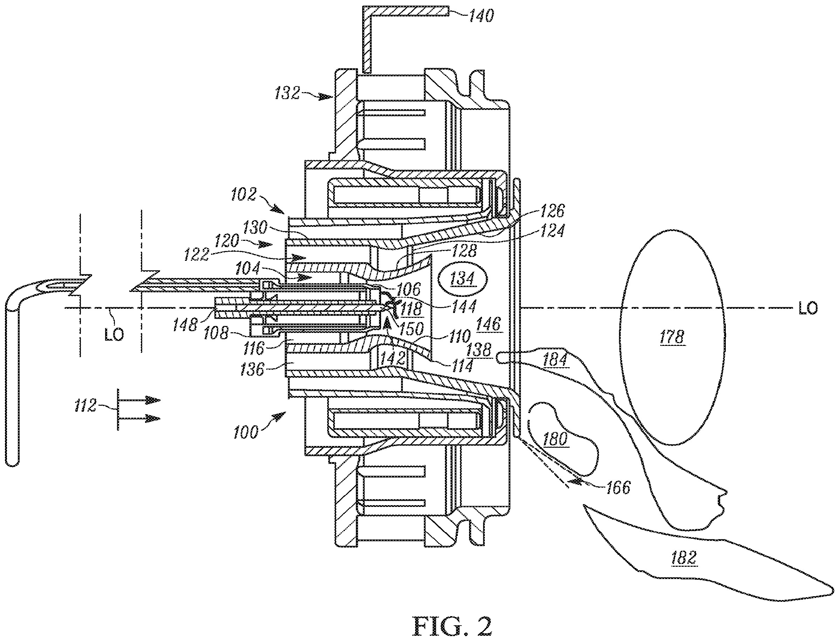

As shown in Fig. 2, the apparatus 100 may include a swirler assembly 102, which includes at least one swirler assembly inlet 104 radially or longitudinally separated from at least one swirler assembly outlet 106 by a swirler assembly body 108 defining a swirler assembly inner wall 110. The term "radially" is used herein to reference a direction substantially perpendicular to longitudinal axis LO, with the longitudinal axis extending in the horizontal direction, in the orientation of Fig. 2. The term "longitudinally" is used herein to reference a direction substantially parallel to longitudinal axis LO. The swirler assembly body 108 may be electrically separated from the swirler assembly inner wall 110 by the swirler assembly inlet 104, which may define a swirler assembly outer wall 112. The swirler assembly outer wall 112 may also be electrically separated from the swirler assembly inner wall 110. The electrical separation between any elements of the apparatus 100 can be accomplished, for example, by insulating the elements with a non-conductive ceramic, such as, but not limited to, Aluminum Oxide (Al₂O₃) Aluminum Nitride (AlN), Boron Nitride and (BN) Silicon Nitride (Si₃N₄).

The swirler assembly 102, when present, assists combustion air to enter into the apparatus 100 and attain a desired flow direction. The swirler assembly 102 accepts combustion air from an ambient source through a swirler assembly inlet 104. The combustion air then travels through the swirler assembly body 108 and exits the swirler assembly 102 through the swirler assembly outlet 106.

The swirler assembly 102, when present, includes at least one swirler vane 114 for imparting a helical direction to the combustion air. At least one swirler vane 114 may extend in a direction that is at least one of laterally inward and laterally outward from the swirler assembly inner wall 110 (whether or not the "airfoil"-shaped structure forming the swirler vane 114 is itself cantilevered directly from the swirler assembly inner wall 110 or from another structure of the swirler assembly 102). Such swirler vanes 114 create a fluid shear force 116 to promote fuel atomization by applying aerodynamic force to fuel sheets, forcing the air a radial distance from the longitudinal axis LO after a change in cross-sectional area, and continuing to force the air to expand radially as the air passes through the apparatus 100. The term "lateral" is used herein to indicate a direction in a plane substantially perpendicular to the longitudinal direction LO-i.e., into and out of the plane of the paper in the orientation of Fig. 2. The swirler vane(s) 114, when present, may serve to help impart a helical aspect (A.K.A., "angular momentum") to the flow direction of the combustion air through the swirler assembly body 108 and from the swirler assembly outlet 106.

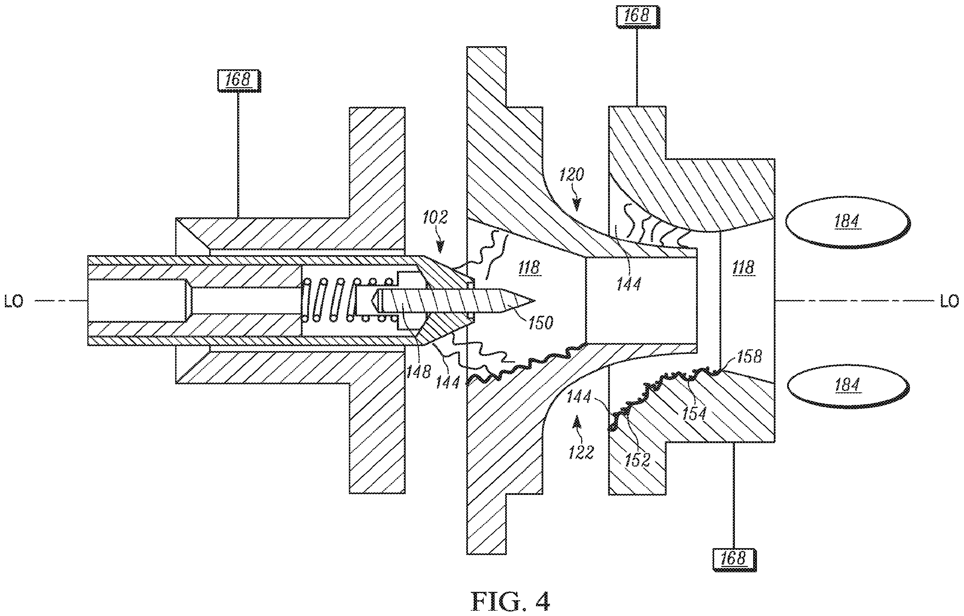

It is contemplated that any provided swirler assembly 102 may be one or both of an axial swirler assembly 102 and a radial swirler assembly 102. It is further contemplated that the apparatus 100 may also include more than one swirler assembly 102 as shown in Fig. 4. If more than one swirler assembly is used, a primary swirler assembly 102 is defined as the swirler assembly 102 with a swirler assembly inlet 104 most proximal (along the engine's longitudinal axis, LO) to a compressor discharge 118. The secondary swirler assembly 120 may have an air inlet 122 at a farther, longitudinal distance from the compressor discharge 118 than the primary swirler assembly air inlet 104. The secondary swirler assembly 120 may have substantially the same configuration as the swirler assembly 102 depicted in Fig. 2.

The primary swirler assembly 102 may be maintained in fluid communication with a fuel nozzle mixing chamber inlet 136. The primary swirler assembly 102 may remain electrically separate from at least one secondary swirler assembly 120. The primary swirler assembly 102 may be maintained in fluid communication with any secondary swirler assemblies 120. The orientation of the swirler assemblies 102, 120 may be configured to provide any desired, directional change upon the flow path of the combustion air.

The secondary swirler assembly 120 includes at least one secondary swirler assembly inlet 122 radially separated from at least one secondary swirler assembly outlet 124 by a secondary swirler assembly body 126 defining a secondary swirler assembly inner wall 128. The secondary swirler assembly body 126 may be electrically separated from the secondary swirler assembly inner wall 128 by the secondary swirler assembly inlet 122. The secondary swirler assembly inlet 122 may define a secondary swirler assembly outer wall 130. The secondary swirler assembly outer wall 130 may also be electrically separated from the secondary swirler assembly inner wall 128. The electrical separation between the secondary swirler assembly inner wall 128 and secondary swirler assembly outer wall 130 can be accomplished by use of any insulator such as the ceramic insulators previously discussed.

### FUEL NOZZLE

A fuel nozzle takes fuel from a fuel source and air from an air source. The air source may be a compressor discharge. The nozzle then mixes the fuel and air to create a fuel-air mixture. In some fuel nozzles this mixing occurs partially within the fuel nozzle body while in other embodiments, the mixing may occur in the combustor, between the dump plane of the fuel nozzle and the flame. The fuel nozzle then directs this mixture to a combustion chamber where the combustion reaction takes place.

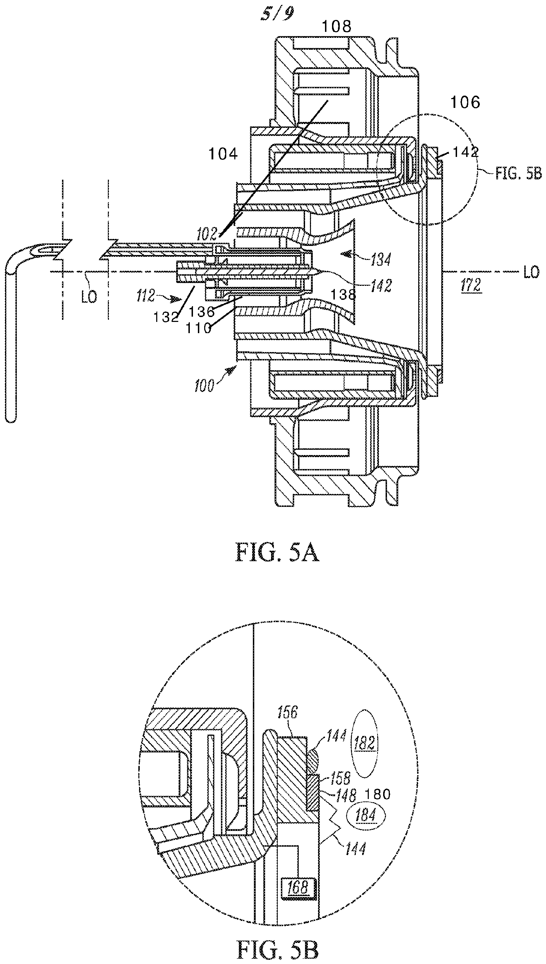

As shown in Figs. 2 and 5A, the apparatus 100 further includes a fuel nozzle 132. The fuel nozzle 132 may contain a fuel nozzle mixing zone 134. The fuel nozzle mixing zone 134 contains a fuel nozzle air inlet 136 and a fuel nozzle air outlet 138. The fuel nozzle mixing zone 134 is in fluid communication with both the fuel nozzle air inlet 136 and a fuel nozzle fuel reservoir 140 (which is not present in the figures), from which fuel, which may be any suitable liquid and/or gaseous fuel, is directed into the fuel nozzle mixing zone 134. It is contemplated that fuels such as unleaded kerosene, naphtha-kerosene blend, 50/50 sasol blend, JP-7, Jet-A, and/or natural gas may be used. The fuel nozzle mixing zone 134 is in fluid communication with both the fuel nozzle air inlet 136 and a fuel nozzle fuel reservoir 140. The fuel nozzle air inlet 136 allows air to flow into the fuel nozzle 132. The fuel nozzle air inlet 136 may accept air from the swirler assembly 102, and the fuel nozzle air inlet 136 may accept air from any one of the primary swirler assembly 102 or secondary swirler assemblies 120. The fuel nozzle air inlet 136 may be in fluid communication with the primary swirler assembly 102 and/or any included secondary swirler assembly(ies) 120. The fuel nozzle mixing zone 134 may be partially exterior to the fuel nozzle air outlet 138. Said another way, fuel and air can continue to mix once they leave the apparatus 100 and enter the combustion chamber volume 174

Combustion air may enter the fuel nozzle mixing zone 134 at the same or different times as does the fuel. Depending upon the fuel contained within the fuel nozzle fuel reservoir 140, the apparatus 100 may take on different geometries for desired performance, and an apparatus 100 having a particular configuration for a desired result may be provided by one having ordinary skill in the art. For example, the apparatus 100 may be configured to include the pressure-atomizing mechanism 116 as discussed above. Fuel and air can be mixed within the fuel nozzle mixing zone 134 at least in part as a result of the helical and/or swirling flow direction of the combustion air that enters the fuel nozzle mixing zone 134. The fuel may continue to mix outside of the fuel nozzle mixing zone 134. When the fuel and air are mixed, a substantially homogenous fuel-air mixture is created.

### PLASMA GENERATOR AND PLASMA DISCHARGE

A plasma generator creates a plasma discharge for use with the fuel-air mixture created by the fuel nozzle. A plasma generator typically has one or more electrodes electrically connected to a voltage source. The electrodes are configured to ionize the air around them creating plasma from the freed electrons and ions in the ionized air. When this plasma is made to interact with a air-fuel mixture, it provides certain benefits to the combustion of the air-fuel mixture. The benefits will be described below.

Also located at least partially within the fuel nozzle 132 is a plasma generator 142. Depicted in Figs. 2-6, the plasma generator 142, in use, creates a plasma discharge (shown schematically as plasma generator discharge 144 throughout the Figures). The plasma generator 142 may be in electrical communication with at least a portion of the fuel nozzle 132, as shown in Fig. 2. The creation of the plasma generator discharge 144 at or near the air-fuel mixture partially ionizes and/or dissociates the fuel-air mixture to create a partially ionized and/or dissociated air-fuel mixture (hereafter referenced as an "at least partially I/D air-fuel mixture") 146 as will be discussed below in more detail.

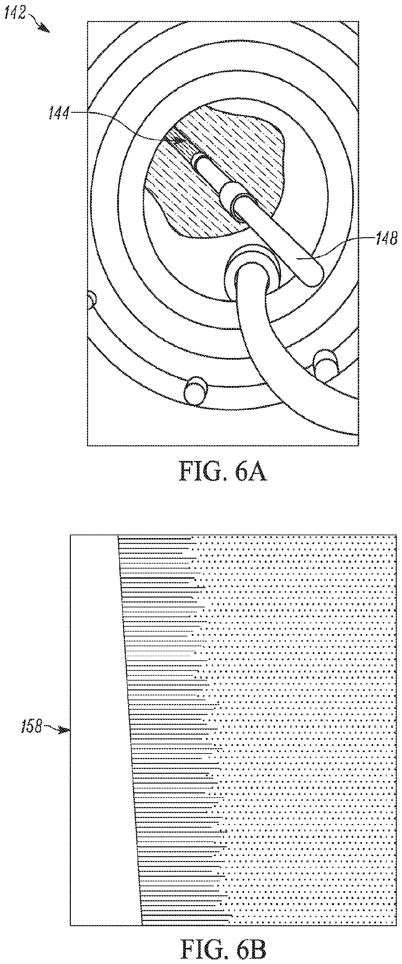

The plasma generator 142 may include an electrode 148 extending substantially longitudinally or laterally from a remaining portion of the plasma generator 142. For instance, the electrode 148 may have a rounded, pointed, or blunt electrode free end 150 capable of generating various types of plasma generator discharges 144 as desired by one of ordinary skill in the art to create an electric field having a desired strength, shape, or other property for a particular use environment. Similarly, the length of the electrode's protrusion from the remaining portion of the plasma generator 142 may differ as desired for different use environments of the apparatus 100. Examples of the plasma generator 142 and electrode 148 are depicted in Figs. 6A-C.

The shape of the electrode free end 150 may vary for use with different plasma generators 142 with the apparatus 100 such as a nanosecond pulsed plasma generator, a dielectric barrier discharge plasma generator, an RF plasma generator, a microwave plasma generator, or a laser plasma generator.

It is contemplated that the swirling of the air from at least one of the swirler assemblies 102, 120 will contribute to the spatial distribution of the plasma filaments from a plasma generator 142 across an area extending radially between at least one secondary swirler assembly inner wall 128 and the primary swirler outer wall 112. In the case of at least nanosecond pulsed plasma generators 142, the generation of more than one filament, each time at a distinct location in a timescale smaller than the characteristic flow time contributes to the apparent spatial distribution of the plasma as well. It is further contemplated that the swirling of the air from at least one of the swirler assemblies 102, 120 will contribute to the spatial distribution of the plasma filaments from a plasma generator 142 across an area extending longitudinally between at least one of the primary 102 or secondary 120 swirler assembly and the mixing zone 134.

Since a flame is, after all, a chemical reaction, the speed of the reaction can be described in terms of the kinetics of the exothermic oxidation of the fuel (e.g., propane). According to the kinetic theory of reactions, increasing the temperature of a system increases the average kinetic energy of the individual molecules. An increase in the kinetic energy of the molecules in turn yields more effective collisions. Therefore, increasing the temperature of a chemical reaction will increase the rate at which that reaction proceeds. The high temperatures of plasma, as well as the high-energy particles created, may be able to aid with enhancing reaction speed to reduce the amount of un-burnt fuel in an engine and solve other combustion challenges such as lean blow-out extension. This extension may not be purely thermal (i.e. with a reaction rate described by an Arrhenius-like expression relating reaction rate as an exponential function of gas temperature), radicals generated by plasma may also contribute to new, and quicker chemical pathways which also enhance reaction rates.

Branch chain reactions with active radicals are an important mechanism for flame propagation. Therefore, for plasma to effect a flame, the discharge should have a high degree of volumetric excitation-i.e., a large volume of gas should be excited by the plasma, and the radicals/excited species generated by the plasma should be able to travel into an appropriate part of the combustion engine (e.g., a reaction zone, a recirculation zone, an R/R zone, a combustion chamber, any combination thereof, or any other suitable area) before they are quenched. The injection of plasma into a combustion engine could increase the flame speed of the fuel and air mixture, thereby decreasing the residence time needed for complete combustion. The injection of plasma may add an additional parameter for the control of flame stabilization. The addition of plasma may also extend the flame extinction strain rate.. Plasma-assisted reactions could substantially increase fuel flexibility and allow for the combustion with low or varying Wobbe numbers. By using plasma-assisted combustion more optimal engines can be designed. Possible benefits include reduced NOx and CO emissions, improved altitude relight and reduced fuel consumption at low powers.

Since plasma has the ability to influence the kinetics of a reaction and shorten ignition time, plasma can increase flammability limits, thereby allowing mixtures with equivalence values φ<1 (i.e., lean mixtures in which there is less fuel present than the stoichiometric ideal) to stabilize. This translates into fuel savings, decreased emissions, and a decrease in operating costs for an engine using such plasma-assisted combustion techniques.

Furthermore, since plasma decreases ignition time, the use of plasma in an engine increases the probability of a successful relight. If combustion ever becomes unstable and extinguishes in a gas turbine, plasma could promote the ignition and stabilization of the new flame, allowing for successful relights and/or preventing the blow off event from occurring altogether. Moreover, previous research has shown that excited states of oxygen (for example atomic oxygen and singlet delta oxygen) contribute to branching and initiation and therefore contribute significantly to the kinetic effects of plasma-assisted combustion. Therefore, since important plasma chemical reactions include the *in-situ* reforming of fuel and the generation of excited states from species in air then the fuel-air mixture should be treated and activated homogenously.

This homogeneous treatment may be achieved in the apparatus 100 through creating a substantially homogenous air-fuel mixture within the fuel nozzle mixing zone 134 and generating plasma at or near the homogenous air-fuel mixture. The degree of homogenous ionization desired is a balance between allowable energy consumption and desired kinetic enhancements. In some applications, it may be desirable for the plasma to act on only a portion of the fuel-air mixture such as the pilot flame 184 or the main flame 182. Here, the plasma may at least partially ionize and/or at least partially dissociate the air-fuel mixture. The process of ionization is achieved when an electric field excites electrons within a molecule so much that the excitation results in either the gain or loss of an electron by/from that molecule. Further ionization may proceed via further excitation, direct electron impact, third body collisions, or other pathways. Dissociation is achieved when the energy provided by plasma causes a partial split in a molecule. This split may result in the separation of the molecule into component atoms, like hydrogen, and the creation of free radicals and/or other activated states. Plasma-generated species such as oxygen may contribute to hydrogen abstraction reactions which react with hydrocarbon molecules to form an OH radical which can further react with other fuel molecules, initiating a combustion reaction. The above described process, or portions thereof, and other similar reactions results in the creation of an at least partially I/D air-fuel mixture 146 using the plasma generator 142 and other components of the apparatus 100.

Furthermore, the plasma generator 142, generally depicted in Figs. 6A-C, may be any device capable of generating plasma. These devices include, but are not limited to, a nanosecond pulsed plasma generator, a dielectric barrier discharge plasma generator, a radiofrequency discharge plasma generator, a laser plasma generator, a microwave plasma generator, a gliding arc plasma generator, an electron beam or any combination thereof. The apparatus 100 may include multiple plasma generators 142, which may be the same or different types of plasma generator 142 and may operate simultaneously or in any desired sequence.

The plasma generator discharge, also generally depicted in Figs. 6A-C, 144 may be at least one of a gliding arc discharge, a streamer discharge, a dielectric barrier discharge, an RF discharge, a filamentary discharge, and a nanosecond pulsed discharge. It is contemplated that the apparatus 100, at any given time, may employ more than one type of plasma generator discharge 144.

A nanosecond pulsed plasma generator generates a nanosecond pulsed plasma 144 by applying high voltage to an electrode and the fuel nozzle is grounded. The fast rise time of the pulse inherent to nanosecond pulsed plasma discharges 144 is desired as it leads to the generation of strong reduced electric fields (E/N) which more efficiently couple their energy to species desirable for combustion.

A very high electric field is generated around the electrode 148 and a large number of streamer discharges 144 will occur. A nanosecond pulsed plasma generator may produce efficient streamer plasma discharges 144. Streamer plasma discharges 144 when a neutral fuel, air, and/or fuel-air mixture is exposed to a large potential difference carried by an electrode 148. When the electric field created by the applied voltage is sufficiently large, plasma electrons strike molecules to ionize them, and the freed electrons go on to strike more molecules in a chain reaction. Then the ionzied region grows quickly forming a streamer discharge 144.

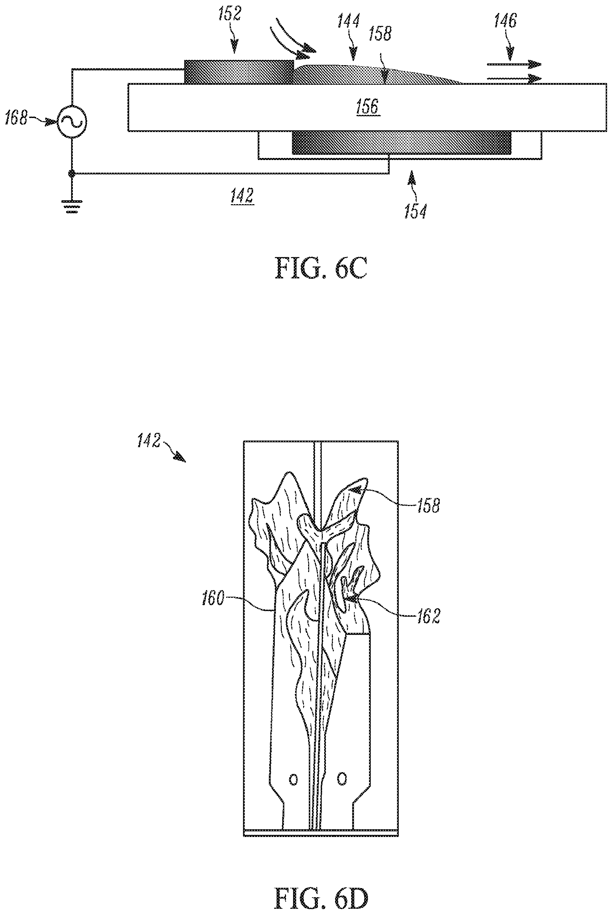

As shown in Fig. 6B and 6C and according to the invention as defined by the claims, a dielectric barrier discharge generator (hereafter referenced as "DBD plasma generator") 142 generates a dielectric barrier discharge 144 between two electrodes 152, 154 separated by an insulating dielectric barrier 156. The generator normally uses high voltage alternating current, but can employ nanosecond pulsed voltages as well. The DBD plasma generator 142 induces a flow close to the surface of the insulating dielectric barrier 158. On the surface 158 the ions collide with the surrounding fuel-air mixture, fuel stream, or air stream. Here, the DBD plasma generator 142 is used to manipulate the fuel, air, and/or fuel-air mixture as well as generate a local temperature increase and active species which serve to produce the effects of plasma-assisted combustion. The DBD plasma generator 142 may be located partially within the fuel nozzle 132. The ionized particles travel from one electrode 152 toward the other 154 near the surface of the insulating dielectric barrier 158 as the charge builds up. A jet of plasma 144 is generated as electrons and move from the surface electrode 152 toward buried electrode 154. These ions collide with fuel or air molecules. Various types of power supplies may be used. In some embodiments, the power supply may produce superposition of DC offsets and AC voltages. Other embodiments may produce a pulsed power output, including short pulses such as nanosecond pulses. The wave form of the output could be sinusoidal, or a variation of a sinusoidal output may be used to generate the desired optimum plasma generation and jet formation for a given electrode configuration. It is contemplated that a plurality of DBD plasma generators 142, may be spaced around the lip of fuel nozzle or on any other nozzle surface.

A radio frequncy plasma generator excites electrons in a plasma by the imposition of an RF field

A laser plasma is generatedby focusing a nanosecond pulse of laser into the fuel/air/fuel-air mixture/recirculation zone. The laser beam rapidly heats and ionizes surrounding molecules via photoionization and inverse bremstalung processes to form plasma.

Microwave induced plasma discharge is a discharge that has high frequency electromagnetic radation typically above the plasma frequency. It is well suited to generate large area plasmas of high plasma density.

A gliding arc discharge occurs when a discharge between two diverging electrodes which initiates typically at the shortest distance between the electrodes and travels downstream with flow. In Fig. 6D, the gliding arc plasma discharges 144 from the electrode 148 to a surrounding, grounded electrode 148.Further configurations are contemplated such that a gliding plasma generator 142 creates a gliding arc discharge 144 in electrical communication with at least two or more of the plasma generator 142, the surface of the primary swirler assembly outer wall 112, and the surface of the primary swirler assembly inner wall 110. A gliding arc type discharge which has the characteristic of traveling downstream, possibly due to a combination of at least one of reduced density downstream and convection of ionized species can also be generated by nanosecond pulses. Another configuration contemplated includes a dielectric barrier discharge plasma generator 142 which creates a dielectric barrier discharge 144 adjacent to the surface of the primary swirler assembly outer wall 112 and the dielectric barrier discharge plasma generator 142 is located at least partially within one of the secondary swirler assemblies' outlet 124. Furthermore, another contemplated configuration includes a filamentary plasma discharge 144 generated between at least one of the electrode free end 150, the primary swirler assembly inner wall 110, the primary swirler assembly outer wall 112, or the secondary swirler assembly inner wall 128. In this configuration, the filamentary plasma discharge 144 may be located adjacent to a shear layer 166 of air within the apparatus 100. Another configuration may permit the primary 102 and secondary 120 swirler assemblies to be in electric communication with an external voltage source 168 to allow for the generation of plasma 144 to occur between any adjacent surfaces (i.e. inner or outer wall) of the primary swirler assembly 102, secondary swirler assembly 120, and/or the fuel nozzle 132.

### COMBUSTION CHAMBER

A combustion chamber houses the combustion reaction of the air-fuel mixture in a combustion engine. After accepting the air-fuel mixture, the air-fuel mixture is combusted within a volume inside the chamber. This reaction provides hot gasses which are expanded and eventually drive the thrust production within a combustion engine.

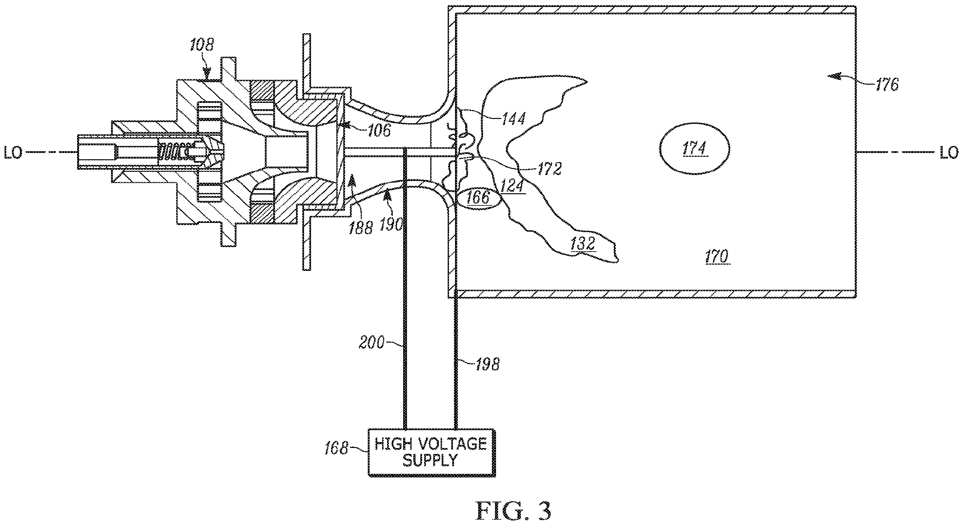

The apparatus 100 also includes a combustion chamber, shown schematically at 170 in Figs. 1 and 3. The combustion chamber 170 contains a combustion chamber inlet 172 in fluid communication with at least one of the fuel nozzle air outlet 138 and the swirler assembly outlet 106. The combustion chamber inlet 172 admits the at least partially I/D air-fuel mixture 146 from the plasma generator 142 into a combustion chamber internal volume 174. The combustion chamber 170 is further defined by a combustion chamber outlet 176 which is longitudinally separated from the combustion chamber inlet 172 by the combustion chamber internal volume 174.

The combustion chamber outlet 176 allows the products from reactions that take place within the combustion chamber 170 to exit the combustion chamber 170. Stated differently, combustion of the at least partially I/D air-fuel mixture 146 with the combustion air may occur at least partially within the combustion chamber internal volume 174 to responsively produce products, and the products exit the combustion chamber internal volume 174 through the combustion chamber outlet 176. The combustion chamber inlet 172 and combustion chamber outlet 176 at least partially define the combustion chamber internal volume 174.

The combustion chamber internal volume 174 may contain one or more R/R zones 178. The term "R/R zone" is used herein to reference a volume within the combustion chamber 170, just downstream from the plasma generator discharge 144, in which reactions and/or recirculation are taking place. The term "reaction zone" is generally used to indicate the entire volume within which reactions are taking place. The term "recirculation zone" is generally used in the art to describe a pattern of flow which reverses and brings combustion products back to the flame; the recirculation zone may be located downstream of the plasma discharge 144.and The reaction zone usually stabilizes in close proximity to the R/R zone 178. An R/R zone 178 may include, for example, to a lip recirculation zone 180. The lip recirculation zone 180 is a relative zone of lower velocity air with some circulation. Both the pilot 184 and the main 182 flames can be anchored at least partially by this zone. A recirculation zone 180 forms around the lip of the fuel nozzle as airflow travels around the lip which acts at least partially like a bluff body in the flow. Flow separation occurs when the adverse pressure gradient cause the portion of the flow closest to the lip edge or combustion wall reverses in flow direction. In some embodiments, the swirl induced from the swirler assembly 102, 120 may be very small and not lead to the formation of the R/R zone 178.

The combustion chamber internal volume 174 may further include a main flame and a pilot flame, shown schematically at 182 and 184, respectively. The R/R zone 178 allows combustion products to proceed toward at least one of the main flame 182 and the pilot flame 184 thereby providing stabilization.

At least a portion of the at least partially I/D air-fuel mixture 146 enters the combustion chamber 170 by first passing into the R/R zone. Within the R/R zone 178, fuel and air are further mixed to provide a more homogenous solution. The R/R zone 178 may also be in direct fluid communication with the fuel reservoir 140. The additional fuel provided to the air-fuel mixture in the R/R zone 178 may or may not become partially ionized. The plasma generator 142 may further ionize and/or dissociate the air-fuel mixture by creating a plasma generator discharge 144 that extends into the combustion chamber 170 such that radicals and activated particles are generated sufficiently close to the R/R zone 178 so as to provide desired flame stabilization. Although the fuel and the air may continue to mix after they leave the fuel nozzle 132 (including the fuel nozzle mixing zone 134, the R/R zone 178 will tend to bring combustion products back to the base of at least one of the main flame 182 and the pilot flame 184, providing stabilization in an area within a desired proximity to the plasma generator discharge 144.

The fuel that entered the R/R zone 178 may become ionized within the combustion chamber 170. In other words, the fuel and air are premixed, and this air-fuel mixture flows into the combustion chamber 170 where combustion in close proximity to the beginning of the flame front (the start of the R/R zone 178). Plasma discharge 144 may be used to create the at least partially I/D air-fuel mixture 146 anytime between premixing and the R/R zone 178 including within the R/R zone 178. The R/R zone 178 brings hot combustion products (mainly from the pilot flame 184) back to the base of the main flame 182 to provide stabilization. The R/R zone 178 is created due to forces and heat addition imparted on the fluids inside the combustion chamber 170 by aerodynamic swirl, the pilot flame 184, the main flame 182 and the at least partially I/D air-fuel mixture 146 itself.

Sending the at least partially I/D air-fuel mixture 146 towards the main flame 182 and/or pilot flame 184, whether or not an R/R zone 178 is used, may be helpful to stabilize the main flame 182 and pilot flame 184 through the previously discussed kinetics.

The combustion chamber internal volume 174 further serves as the location for combustion reactions. These combustion reactions are facilitated by the at least partially I/D air-fuel mixture 146 coming into contact with at least one of the main flame 182 and pilot flame 184. The combustion of the at least partially I/D air-fuel mixture 146 then produces reaction products. These products are then directed to exit the combustion chamber 170 through the combustion chamber outlet 176, producing the desired thrust forces from the engine.

Another aspect of the apparatus 100 permits the plasma generator 142 to be at least partially located within the lip recirculation zone 180. As shown in Figs. 5A and 5B, the plasma generator 142 creates a plasma discharge 144 that is in electrical communication with at least a portion of the lip recirculation zone 180, as shown in Figs. 1, 5A, and 5B. This may be accomplished by extending the electrode 148 at least partially into the lip recirculation zone 180. The creation of the at least partially I/D air-fuel mixture at least partially within the lip recirculation zone 180 sees an increase in the residence time of the plasma along with the benefits previously mentioned. It is further contemplated that the plasma generator 142 is a distance away from the lip recirculation zone 180 wherein the distance can be in the range, for example, of 0-100 times, times the diameter of the fuel injector. The distance may be optimized due to a variety of factors including thermal protection of the electrode tip 148 from the flame versus the desire to place the plasma 144 as close to the R/R zone 178 as practical.

It is further contemplated that a plasma discharge 144 may be in electrical communication with the plasma generator 142 and the outermost perimeter/rim of the fuel nozzle air outlet 138 while passing through at least one of the lip recirculation zone 180, any shear layer 166, the pilot flame 184, and/or the main flame 182. As shown in Fig. 4, a filamentary discharge 144 may be in electrical communication between the inner 110, 128 and outer 112, 130 walls of a primary 102 or secondary 120 swirler assembly. The filamentary discharge 144 may extend beyond the swirler assembly 102 and into the fuel mixing zone 146. In this configuration, air may flow into the swirler assembly 102, 120 through the swirler inlet, 104, 122 and the air may partially ionize within the swirler assembly inlet 104, 122 prior to mixing with fuel forming the at least partially I/D air-fuel mixture 146. The discharge 144 may continue to ionize the partially I/D air-fuel mixture 146 when it leaves the swirler assembly 102, 120 and enters the mixing zone 134 ensuring further ionization. The ionization occurs in proximity to the outermost perimeter/rim of the fuel nozzle air outlet 138 and the lip recirculation zone 180. A dielectric barrier generator 142 may also be placed between the inner 110, 128 and outer 112, 130 walls of a primary 102 or secondary 120 swirler assembly and extend into the mixing zone 134. This creates a dielectric barrier discharge 144 and permits similar ionization of the air and under some conditions, the fuel creating the at least partially I/D air-fuel mixture 146 and further ionization of the at least partially I/D air-fuel mixture 146 in proximity to the outermost perimeter/rim of the fuel nozzle air outlet 138 and the lip recirculation zone 180. Furthermore, a dielectric barrier discharge plasma generator 142 may be located on the outermost perimeter/rim of the fuel nozzle air outlet 138, a dielectric barrier discharge may be in proximity to the surface of the dielectric barrier generator 142 at least partially located within the lip recirculation zone 180, and the dielectric barrier discharge 144 may extend at least partially into at least one of the pilot flame 184 and the main flame 182.

It is further contemplated that multiple arrangements of plasma generators 142 and plasma discharge 144 made in this disclosure may be used simultaneously or in some combination. For example, as shown in Fig. 4, the filamentary plasma discharge 144 may create the at least partially I/D air-fuel mixture 146 at a secondary swirler assembly inlet 122, a dielectric barrier discharge creates the at least partially I/D air-fuel mixture 146 at a different secondary swirler assembly inlet 122, and a second filamentary plasma discharge 144 creates the at least partially I/D air-fuel mixture 146 at a third location within the primary swirler assembly body 108. One, two, or all three of the plasma discharges 144 may be generated at any time given the operating conditions of the apparatus 100. It is further contemplated that fewer or more plasma generators 142 and/or different types of plasma generators 142 than the three described in this paragraph may also operate at a given time.

Furthermore, the apparatus 100 as shown in Fig. 3 may include a mixing duct 190 located between the at least one swirler assembly outlet 106 and the combustion chamber inlet 172. The combustion air enters the swirler assembly inlet 104, flows through the swirler assembly body 108, and exits the swirler assembly body 108 through the swirler assembly outlet 106. The combustion air further flows from the swirler assembly outlet 106 into the mixing duct 190, and into the combustion chamber internal volume 174 through the combustion chamber inlet 172. The mixing duct 190 may be in fluid communication with at least one swirler assembly 102, 120 and the combustion chamber 170. The at least one plasma generator 142 may be located at least partially within the mixing duct 190, at least partially within in the combustion chamber 170, and/or partially in both the mixing duct 190 and the combustion chamber 170. The plasma generator 142 may be electrically connected to an external voltage source 168 through an insulated connection 200 in the wall 202 of at least one of the fuel nozzle mixing duct 190 and another external wall 202 of the fuel nozzle assembly 132.

In this configuration, the plasma generator electrode 148 can be a pin, ring, and/or any other suitable structure that is anchored substantially in the radial center of the mixing duct 190 where the electrode is concentric within a pressure-atomizing mechanism 116 located within the apparatus 100, and the electrode 148 extends parallel to the walls 202 of the mixing duct 190 in the direction of the combustion chamber 170 for axisymmetric plasma discharge proximal to the combustion chamber flames 182, 184. The combustion chamber inlet 172 then admits the at least partially I/D fuel-air mixture 146 from the plasma generator 142 into the combustion chamber internal volume 174 wherein combustion of the at least partially I/D fuel-air mixture 146 occurs at least partially within the combustion chamber internal volume 174 to responsively produce the combustion products 182, 184 exiting the combustion chamber internal volume 174 through the combustion chamber outlet 176.

### CONTROL SYSTEM

This control system provides a second method of stabilization combustion within a combustion engine. Certain conditions within a combustion chamber can cause instabilities. These instabilities can lead to, among other things, engine blow-outs and damage to the combustion engine. Typically, the only way to stabilize these instabilities is to modulate the fuel flow to a combustion engine as to attempt to modulate the equivalence ratio/heat release rate to control instabilities. However, the present disclosure introduces a second way of stabilizing unsteady flames. Due to the benefits of plasma being introduced to a combustion engine's air-fuel mixture, stabilization can also occur by altering the interaction between the plasma and air-fuel mixture. In some aspects this can occur in an open-loop system where the stability enhancement from the plasma or the change in flame location can change the flame transfer function and reduce instability amplitudes

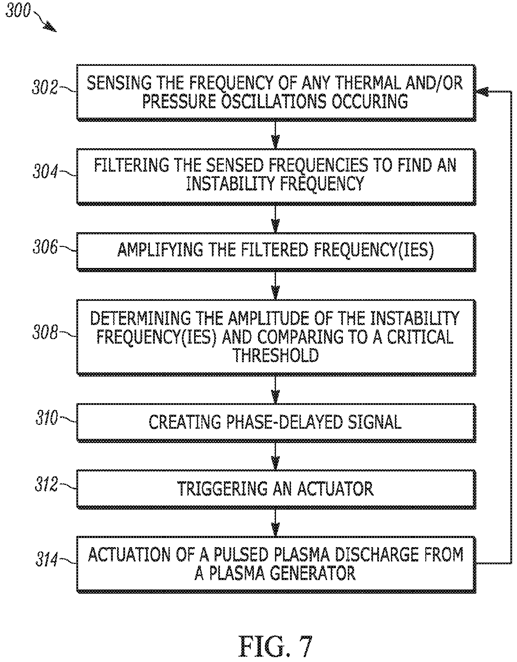

Another aspect of this disclosure is the creation of a control system 300 for stabilizing oscillations within the combustion chamber 170 as outlined, in an example embodiment, in Fig. 7. In the first step 302, the frequency of any thermal and/or pressure oscillations occurring in the combustion chamber 170 are sensed. It is contemplated that this sensing 302 may be done in any suitable manner, such as, but not limited to, the use of a pressure transducer, an optical sensor, a thermocouple, any other desired type of sensor such as capacitance probe, electrical impedance sensor, conductivity or ionization probes, time domain reflectometer, and/or any combination thereof. In the second step 304, the frequencies sensed in step one 302 may be filtered to find an instability frequency. The instability frequency is the frequency at which the pressure in the combustor fluctuates. These pressure fluctuations may cause damages to transition pieces and combustor liners for example Depending on the severity for the cause of the instability, a jet engine might experience a recoverable lean condition, multiple recoverable lean conditions, or a non-recoverable lean condition which may result in an extinguishing of the flames 182, 184 or a blow-out. It is contemplated that the second step 304 may be accomplished with the use of an extended Kalman filter and/or any other suitable filter.

In the third step 306, the filtered frequencies may be amplified to capture the instability frequency within the combustion chamber in order to isolate the dominant instability mode. In the fourth step 308, the amplitude of the instability is determined to be at, above, or below a critical threshold. If the amplitude is above a critical frequency, then damage to the apparatus 100 may occur or be more likely to occur. In the fifth step 310, a phase-delayed signal may be created which then triggers an actuator in the sixth step 312. In step seven 314, a pulsed plasma discharge 144 is actuated from the plasma generator 142. It is contemplated that the pulsed plasma discharge 144 is produced/actuated as a response to the created phase-delayed signal in step six 312. In the case of a nanosecond pulsed plasma, this signal may consist of "chirps" of nanosecond scale pulses individually modulated at acoustically relevant time scales. The inter-pulse time may also be modulated instead or in addition to this strategy.

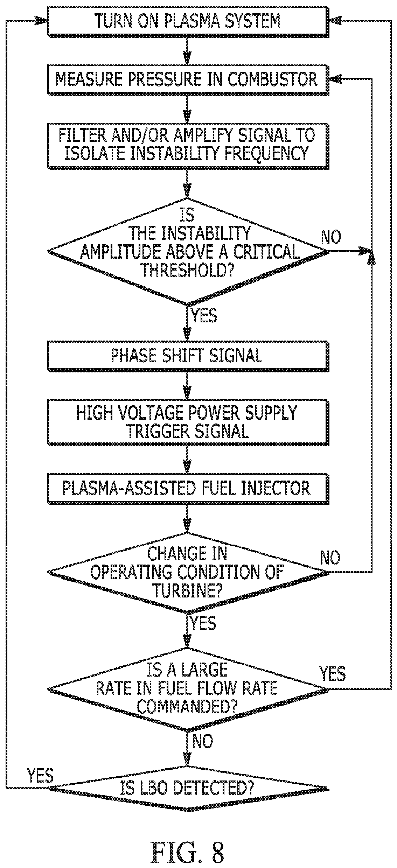

The pulsed plasma discharge 144 may result in the stabilization of the apparatus by assisting with the combustion in the at least partially I/D air-fuel mixture 146. More specifically, the control of combustion via plasma may result in the stabilization of the thermal and pressure oscillations within the combustion chamber 170. If, after production/actuation of the pulsed plasma discharge 144, thermal and/pressure oscillations are still present within the combustion chamber 170, then the steps are repeated until stabilization occurs. Typically, instabilities are controlled by pulsing fuel flow levels of the combustion engine or via passive methods such as Hemholtz dampeners. The method described herein and shown in Figs. 7-8 provides for a second control mechanism allowing pulsed plasma to stabilize the combustion engine. Of course, the steps shown and described herein could be accomplished in any order, sequentially and/or concurrently, and in any desired combination(s), including combinations with fewer than all of the disclosed steps.

In an effort to maintain clarity in the Figures, certain ones of duplicative components shown have not been specifically numbered, but one of ordinary skill in the art will realize, based upon the components that were numbered, the element numbers which should be associated with the unnumbered components; no differentiation between similar components is intended or implied solely by the presence or absence of an element number in the Figures.

## Claims

1. An apparatus (100) for the combustion of fuel, comprising:
a swirler assembly (102) having at least one swirler assembly inlet (104) and at least one swirler assembly outlet (106) separated from the at least one swirler assembly inlet (104) by a swirler body (108) defining a swirler assembly inner wall (110);
a fuel nozzle (132), having a fuel nozzle mixing zone (134), a fuel nozzle air inlet (136), and a fuel nozzle air outlet (138), the fuel nozzle mixing zone (134) being in fluid communication with both a fuel nozzle fuel reservoir (140) and the fuel nozzle air inlet (136), the fuel nozzle air inlet (136) allowing air to flow into the fuel nozzle (132),
wherein fuel from the fuel nozzle fuel reservoir (140) is directed into the fuel nozzle mixing zone (134) and combines with air inside the fuel nozzle mixing zone (134) to form a fuel-air mixture;
at least one plasma generator (142) located at least partially within a lip recirculation zone (180), the plasma generator (142) at least partially ionizing and/or dissociating the fuel-air mixture to generate at least one of an at least partially ionized air-fuel mixture and an at least partially dissociated air-fuel mixture ("at least partially I/D air-fuel mixture") via a plasma generator discharge (144);
a combustion chamber (170) having a combustion chamber inlet (172) in fluid communication with the swirler assembly outlet (106), the combustion chamber having (170) a combustion chamber outlet (176) , the combustion chamber inlet (172) and outlet (176) being longitudinally separated by a combustion chamber internal volume (174) including a zone, just downstream of the plasma generator discharge, in which reactions and/or recirculation are taking place (an R/R zone) , at least one of a main flame (182) and a pilot flame (184), and the lip recirculation zone (180) including a stabilization zone of low velocity air circulation, the combustion chamber inlet (172) admitting the at least partially I/D air-fuel mixture from the plasma generator (142) into the combustion chamber internal volume (174);
wherein combustion air enters the swirler assembly inlet (104), flows through the swirler body (108), and exits the swirler body (108) through the swirler assembly outlet (106), the combustion air flowing from the swirler assembly outlet (106) into the combustion chamber internal volume (174) through the combustion chamber inlet (172);
wherein a plurality of combustion air inputs allows for fluidly separate and individually contiguous flows of air to travel through the combustion chamber (170) with a rotational velocity imparted on the flows by the swirler assembly (102);
wherein the plurality of combustion air inputs travel at different speeds and/or in opposite spiral directions, where the area between separate air flows contains a shear layer of increased turbulence for improving at least one of mixing, atomization and/or flame stabilization; and
wherein combustion of the at least one of an at least partially ionized air-fuel mixture and an at least partially I/D air-fuel mixture with the plurality of combustion air inputs occurs at least partially within the combustion chamber internal volume (174) to responsively produce combustion products, the combustion products exiting the combustion chamber internal volume (174) through the combustion chamber outlet (176); and
wherein a non-conductive material (156) is provided to electrically isolate at least one conductor (152, 154) and accordingly provide a dielectric barrier at a distal end of the swirler assembly (102).

2. The apparatus as set forth in claim 1, wherein the combustion products are produced at least partially by at least one of the pilot flame (184) and the main flame (182).

3. The apparatus as set forth in claim 1, wherein the plasma generator (142) is configured at least partially within the lip recirculation zone (180) to at least partially ionize and/or dissociate the fuel-air mixture associated with the main flame (182).

4. The apparatus as set forth in claim 1, wherein the plasma generator (142) is configured at least partially within the lip recirculation zone (180) to at least partially ionize and/or dissociate the fuel-air mixture associated with the pilot flame (184).

5. The apparatus as set forth in claim 1, wherein the plasma generator (142) is configured at least partially within the lip recirculation zone (180) to at least partially ionize and/or dissociate the fuel-air mixture before the fuel-air mixture contacts the main flame (182).

6. The apparatus as set forth in claim 1, wherein the plasma generator (142) is configured at least partially within the lip recirculation zone (180) to discharge filamentary plasma into the pilot flame (184).

7. The apparatus as set forth in claim 1, wherein the plasma generator (142)_ is configured at least partially within the lip recirculation zone (180) to increase the residence time of species in the plasma and place the plasma in a region of lower density.

8. The apparatus set forth in claim 4, wherein the plasma generator (142) creates a plasma discharge that is in electrical communication with both the plasma generator (142) and a surface of the fuel nozzle (132), while passing through at least one of the lip recirculation zone (180), any shear layer (166), the pilot flame (184), and the main flame (182).

9. 11. The apparatus set forth in claim 1, wherein a dielectric barrier discharge plasma generator (142) creates a dielectric barrier discharge in proximity to the surface of the dielectric barrier at least partially located within the lip recirculation zone (180), and the dielectric barrier discharge extends at least partially into at least one of the pilot flame (184) and the main flame (182).

## Patentansprüche

1. Einrichtung (100) zur Verbrennung von Brennstoff, umfassend:
eine Verwirbleranordnung (102), die mindestens einen Verwirbleranordnungseinlass (104) und mindestens einen Verwirbleranordnungsauslass (106) aufweist, der von dem mindestens einen Verwirbleranordnungseinlass (104) durch einen Verwirblerkörper (108) getrennt ist, wobei er eine Verwirbleranordnungsinnenwand (110) definiert;
eine Brennstoffdüse (132), die einen Brennstoffdüsenmischbereich (134), einen Brennstoffdüsenlufteinlass (136) und einen Brennstoffdüsenluftauslass (138) aufweist, wobei der Brennstoffdüsenmischbereich (134) in fluider Kommunikation sowohl mit einem Brennstoffdüsen-Brennstoffvorratsbehälter (140) als auch dem Brennstoffdüsenlufteinlass (136) steht, wobei es der Brennstoffdüsenlufteinlass (136) erlaubt, dass Luft in die Brennstoffdüse (132) strömt,
wobei Brennstoff von dem Brennstoffdüsen-Brennstoffvorratsbehälter (140) in den Brennstoffdüsenmischbereich (134) gelenkt wird und sich innerhalb des Brennstoffdüsenmischbereichs (134) mit Luft verbindet, um ein Brennstoff-Luft-Gemisch zu bilden; mindestens ein Plasmagenerator (142) mindestens teilweise innerhalb eines Lippenrezirkulationsbereichs (180) gelegen ist, der Plasmagenerator (142) mindestens teilweise das Brennstoff-Luft-Gemisch ionisiert und/oder dissoziiert, um mindestens eines von einem mindestens teilweise ionisierten Luft-Brennstoff-Gemisch und einem mindestens teilweise dissoziierten Luft-Brennstoff-Gemisch "(mindestens teilweise I/D Luft-Brennstoff-Gemisch") über eine Plasmageneratorentladung (144) zu erzeugen;
eine Brennkammer (170), die einen Brennkammereinlass (172) in fluider Kommunikation mit dem Verwirbleranordnungsauslass (106) aufweist, wobei die Brennkammer (170) einen Brennkammerauslass (176) aufweist, wobei der Brennkammereinlass (172) und -auslass (176) der Länge nach durch ein Brennkammer-Innenvolumen (174) getrennt sind, das einen Bereich direkt stromabwärts von der Plasmageneratorentladung einschließt, in dem Reaktionen und/oder Rezirkulation stattfinden (ein R/R-Bereich), mindestens eines von
einer Hauptflamme (182) und einer Zündflamme (184), und der Lippenrezirkulationsbereich (180) einen Stabilisierungsbereich mit Luftzirkulation mit niedriger Geschwindigkeit einschließt, der Brennkammereinlass (172) das mindestens teilweise I/D Luft-Brennstoff-Gemisch von dem Plasmagenerator (142) in das Brennkammer-Innenvolumen (174) einlässt;
wobei Verbrennungsluft in den Verwirbleranordnungseinlass (104) eintritt, durch den Verwirblerkörper (108) strömt und aus dem Verwirblerkörper (108) über den Verwirbleranordnungsauslass (106) austritt, wobei die Verbrennungsluft von dem Verwirbleranordnungsauslass (106) in das Brennkammer-Innenvolumen (174) durch den Brennkammereinlass (172) strömt;
wobei es eine Vielzahl von Verbrennungslufteingaben erlaubt, dass fluidmäßig getrennte und individuell benachbarte Ströme von Luft mit einer Rotationsgeschwindigkeit, die auf die Ströme von der Verwirbleranordnung (102) beaufschlagt wird, durch die Brennkammer (170) laufen;
wobei die Vielzahl von Verbrennungslufteingaben mit unterschiedlichen Geschwindigkeiten und/oder in entgegengesetzte Spiralrichtungen laufen, wobei die Fläche zwischen getrennten Luftströmen eine Scherschicht mit erhöhter Turbulenz beinhaltet, um mindestens eines von Vermischen, Vernebelung und/oder Flammenstabilisierung zu verbessern; und wobei Verbrennung von dem mindestens einen von einem mindestens teilweise ionisierten Luft-Brennstoff-Gemisch und einem mindestens teilweise I/D Luft-Brennstoff-Gemisch mit der Vielzahl von Verbrennungslufteingaben mindestens teilweise innerhalb des Brennkammer-Innenvolumens (174) geschieht, um in Reaktion darauf Verbrennungsprodukte zu produzieren, wobei die Verbrennungsprodukte aus dem Brennkammer-Innenvolumen (174) über den Brennkammerauslass (176) austreten; und
wobei ein nicht leitendes Material (156) bereitgestellt ist, um mindestens einen Leiter (152, 154) elektrisch zu isolieren und dementsprechend am distalen Ende der Verwirbleranordnung (102) eine dielektrische Barriere bereitzustellen.

2. Einrichtung nach Anspruch 1, wobei die Verbrennungsprodukte mindestens teilweise durch mindestens eines von der Zündflamme (184) und der Hauptflamme (182) produziert werden.

3. Einrichtung nach Anspruch 1, wobei der Plasmagenerator (142) mindestens teilweise innerhalb des Lippenrezirkulationsbereichs (180) konfiguriert ist, um das der Hauptflamme (182) zugeordnete Brennstoff-Luft-Gemisch mindestens teilweise zu ionisieren und/oder zu dissoziieren.

4. Einrichtung nach Anspruch 1, wobei der Plasmagenerator (142) mindestens teilweise innerhalb des Lippenrezirkulationsbereichs (180) konfiguriert ist, um das der Zündflamme (184) zugeordnete Brennstoff-Luft-Gemisch mindestens teilweise zu ionisieren und/oder zu dissoziieren.

5. Einrichtung nach Anspruch 1, wobei der Plasmagenerator (142) mindestens teilweise innerhalb des Lippenrezirkulationsbereichs (180) konfiguriert ist, um das Brennstoff-Luft-Gemisch mindestens teilweise zu ionisieren und/oder zu dissoziieren, bevor das Brennstoff-Luft-Gemisch mit der Hauptflamme (182) in Berührung kommt.

6. Einrichtung nach Anspruch 1, wobei der Plasmagenerator (142) mindestens teilweise innerhalb des Lippenrezirkulationsbereichs (180) konfiguriert ist, um fadenförmiges Plasma in die Zündflamme (184) zu entladen.

7. Einrichtung nach Anspruch 1, wobei der Plasmagenerator (142) mindestens teilweise innerhalb des Lippenrezirkulationsbereichs (180) konfiguriert ist, um die Verweilzeit von Arten in dem Plasma zu erhöhen und das Plasma in eine Region mit geringerer Dichte zu platzieren.

8. Einrichtung nach Anspruch 4, wobei der Plasmagenerator (142) eine Plasmaentladung erzeugt, die sowohl mit dem Plasmagenerator (142) als auch einer Oberfläche der Brennstoffdüse (132) in elektrischer Kommunikation steht, während es durch mindestens einem von dem Lippenrezirkulationsbereich (180), einer Scherschicht (166), der Zündflamme (184) und der Hauptflamme (182) durchgeht.

9. Einrichtung nach Anspruch 1, wobei ein Plasmagenerator (142) mit dielektrischer Barriereentladung eine dielektrische Barriereentladung in der Nähe zu der Oberfläche der dielektrischen Barriere erzeugt, die mindestens teilweise innerhalb des Lippenrezirkulationsbereichs (180) gelegen ist, und sich die dielektrische Barriereentladung mindestens teilweise in mindestens eines von der Zündflamme (184) und der Hauptflamme (182) erstreckt.

## Revendications

1. Appareil (100) pour la combustion de carburant, comprenant :
un ensemble coupelle de turbulence (102) présentant au moins une entrée d'ensemble coupelle de turbulence (104) et au moins une sortie d'ensemble coupelle de turbulence (106) séparée de la au moins une entrée d'ensemble coupelle de turbulence (104) par un corps de coupelle de turbulence (108) définissant une paroi interne d'ensemble coupelle de turbulence (110) ;
un injecteur de carburant (132), présentant au moins une zone de mélange d'injecteur de carburant (134), une entrée d'air d'injecteur de carburant (136) et une sortie d'air d'injecteur de carburant (138), la zone de mélange d'injecteur de carburant (134) étant en communication fluidique avec à l'a fois un réservoir de carburant d'injecteur de carburant (140) et l'entrée d'air d'injecteur de carburant (136), l'entrée d'air d'injecteur de carburant (136) permettant à de l'air de s'écouler dans l'injecteur de carburant (132),
dans lequel du carburant provenant du réservoir de carburant d'injecteur de carburant (140) est dirigé dans la zone de mélange d'injecteur de carburant (134) et se combine à de l'air à l'intérieur de la zone de mélange d'injecteur de carburant (134) pour former un mélange carburant-air ; au moins un générateur de plasma (142) situé au moins partiellement à l'intérieur d'une zone de recirculation à lèvre (180), le générateur de plasma (142) ionisant et/ou dissociant au moins partiellement le mélange carburant-air pour générer au moins un d'un mélange air-carburant au moins partiellement ionisé et d'un mélange air-carburant au moins partiellement dissocié (« mélange air-carburant au moins partiellement I/D ») par le biais d'une décharge de générateur de plasma (144) ;
une chambre de combustion (170) présentant une entrée de chambre de combustion (172) en communication fluidique avec la sortie d'ensemble coupelle de turbulence (106), la chambre de combustion (170) présentant une sortie de chambre de combustion (176), l'entrée (172) et la sortie (176) de chambre de combustion étant séparées longitudinalement par un volume interne de chambre de combustion (174) incluant une zone, juste en aval de la décharge de générateur de plasma, dans laquelle ont lieu des réactions et/ou une recirculation (une zone R/R), au moins une
d'une flamme principale (182) et d'une flamme pilote (184), et la zone de recirculation à lèvre (180) incluant une zone de stabilisation de circulation d'air à faible vitesse, l'entrée de chambre de combustion (172) admettant le mélange air-carburant au moins partiellement I/D provenant du générateur de plasma (142) dans le volume interne de chambre de combustion (174) ;
dans lequel de l'air de combustion entre dans l'entrée d'ensemble coupelle de turbulence (104), s'écoule à travers le corps de coupelle de turbulence (108), et sort du corps de coupelle de turbulence (108) à travers la sortie d'ensemble coupelle de turbulence (106), l'air de combustion s'écoulant de la sortie d'ensemble coupelle de turbulence (106) dans le volume interne de chambre de combustion (174) à travers l'entrée de chambre de combustion (172) ;
dans lequel une pluralité d'entrées d'air de combustion permet à des écoulements d'air fluidiquement séparés et individuellement contigus de se déplacer à travers la chambre de combustion (170) avec une vitesse de rotation conférée aux écoulements par l'ensemble coupelle de turbulence (102) ;
dans lequel la pluralité d'entrées d'air de combustion se déplacent à des vitesses différentes et/ou dans des directions en spirale opposées, où la zone entre des écoulements d'air séparés contient une couche de cisaillement de turbulence accrue pour améliorer au moins un d'un mélange, d'une atomisation et/ou d'une stabilisation de flamme, et dans lequel une combustion de l'au moins un d'un mélange air-carburant au moins partiellement ionisé et d'un mélange air-carburant au moins partiellement I/D avec la pluralité d'entrées d'air de combustion se produit au moins partiellement à l'intérieur du volume interne de chambre de combustion (174) pour produire en réponse des produits de combustion, les produits de combustion sortant du volume interne de chambre de combustion (174) à travers la sortie de chambre de combustion (176) ; et
dans lequel un matériau non conducteur (156) est fourni pour isoler électriquement au moins un conducteur (152, 154) et fournir en conséquence une barrière diélectrique à une extrémité distale de l'ensemble coupelle de turbulence (102).

2. Appareil selon la revendication 1, dans lequel les produits de combustion sont produits au moins partiellement par au moins une de la flamme pilote (184) et de la flamme principale (182).

3. Appareil selon la revendication 1, dans lequel le générateur de plasma (142) est configuré au moins partiellement à l'intérieur de la zone de recirculation à lèvre (180) pour ioniser et/ou dissocier au moins partiellement le mélange carburant-air associé à la flamme principale (182).

4. Appareil selon la revendication 1, dans lequel le générateur de plasma (142) est configuré au moins partiellement à l'intérieur de la zone de recirculation à lèvre (180) pour ioniser et/ou dissocier au moins partiellement le mélange carburant-air associé à la flamme pilote (184).

5. Appareil selon la revendication 1, dans lequel le générateur de plasma (142) est configuré au moins partiellement à l'intérieur de la zone de recirculation à lèvre (180) pour ioniser et/ou dissocier au moins partiellement le mélange carburant-air avant que le mélange carburant-air entre en contact avec la flamme principale (182).

6. Appareil selon la revendication 1, dans lequel le générateur de plasma (142) est configuré au moins partiellement à l'intérieur de la zone de recirculation à lèvre (180) pour décharger du plasma filamenteux dans la flamme pilote (184).

7. Appareil selon la revendication 1, dans lequel le générateur de plasma (142) est configuré au moins partiellement à l'intérieur de la zone de recirculation à lèvre (180) pour augmenter le temps de séjour d'espèces dans le plasma et placer le plasma dans une région de plus basse densité.

8. Appareil selon la revendication 4, dans lequel le générateur de plasma (142) crée une décharge de plasma qui est en communication électrique à la fois avec le générateur de plasma (142) et une surface de l'injecteur de carburant (132), tout en passant à travers au moins une de la zone de recirculation à lèvre (180), d'une quelconque couche de cisaillement (166), de la flamme pilote (184) et de la flamme principale (182).

9. Appareil selon la revendication 1, dans lequel un générateur de plasma de décharge à barrière diélectrique (142) crée une décharge à barrière diélectrique à proximité de la surface de la barrière diélectrique située au moins partiellement à l'intérieur de la zone de recirculation à lèvre (180), et la décharge à barrière diélectrique s'étend au moins partiellement dans au moins une de la flamme pilote (184) et de la flamme principale (182).
